# EUROPEAN PATENT APPLICATION

(11) **EP 3 343 362 A1**
(43) Date of publication of application: **04.07.2018**
(21) Application number: 16306826.5
(22) Date of filing: 27.12.2016
(51) Int. Cl.: G06F 9/44, G06F 17/30, G06F 9/54

(54) **TOOLS FOR DESIGNING APPLICATIONS WITH AN AUTOMATIC DETERMINATION OF CONTENT OF INTEREST AND GENERATION OF LAYOUT BASED ON CONTENT OF INTEREST**

(71) Applicant: Intuilab, 31670 Labege (FR)
(72) Inventor: HERMET-CHAVANNE, Alban, 31670 LABEGE (FR); ENCONTRE, Vincent, 31500 TOULOUSE (FR); DAURES, Nicolas, 81500 VILLENEUVE-LES-LAVAUR (FR); VIOLAS, Jérémie, 31200 TOULOUSE (FR)
(74) Representative: Nguyen-Van-Yen, Christian

(57) **Abstract**

The invention relates to a designer computing device to generate an application, and a user computing device to execute the application. The designer computing device executes decision rules for determining the type of properties and performing a selection of properties of interest of a class to render the development of the application by a designer easier. Indeed, this allows a designer choosing the properties of an object to display among pre-selected properties of interest. Furthermore, a designer computing device of the invention is able to automatically generate a layout of the application, based on the previously selected properties.

## Description

### FIELD OF THE INVENTION

The present invention relates to the design of applications, execution of applications, and development of design tools for designing applications. More specifically, the present invention relates to design tools which allow a designer without programming skills to easily design or create content enhanced applications.

### BACKGROUND PRIOR ART

When developing an application or a website, the access to digital assets is critical. Digital assets or assets, as referenced to in the rest of this description, comprise pictures, sounds, or any other kind of media or data that brings meaningful content to an application or website.

Web APIs (Application Programming Interface) are online APIs that bring to a client an access to assets of a given service. The use of Web APIs nowadays allows developers to program in the applications they develop an access to an increasingly large and diverse amount of assets. For example, the Spotify™ API is a Web API provided by the Music streaming service of the same brand, and allows accessing various assets such as a description of an artist, album, track, etc... Similar APIs exist in very different fields. For example, the Riksjmuseum API provides developers with an access to the assets of the Riksjmuseum of Amsterdam, with queries to obtain an access to descriptions of painters, paintings, etc... Similarly, the video streaming website Netflix™ provides an API for accessing Netflix assets. The number of available APIs is constantly growing, and virtually any asset may very well be, in a foreseeable future, accessible through a Web API. There is, in parallel, a strong demand from users to access this variety of assets in websites or applications.

A Web API which provides an access to assets or services that may be used not only for building a website, but also for developing programs or applications. For example, the Spotify Web API allows browsing artists, tracks and playing music and may be used for example to develop a webpage, but also a widget to be embedded in a webpage, an application or a part of an application, etc ... In other examples, the Web API allows performing services such as paying for the Stripe API, or sending a text message for the Twilio API. Web API allows a web browser or an application to request a server to perform virtually any service. Thus, in addition to providing access to an unprecedented amount of assets and services, the Web APIs provides a very versatile solution to develop a complete range of solutions for presenting and interacting with assets. The access to Web APIs is thus becoming a critical step for developing websites or applications.

Web APIs are usually presented in the form of a collection of objects and queries. The use of queries allows a developer to retrieve collections of objects having a large number of occurrences. In order to limit the number of queries and objects exposed by the Web APIs, the Web APIs usually allows the developer to use elementary queries and objects, and a developer needs to combine queries to define more complex behaviors. Depending on the properties or objects he or she is interested in, a developer may need to use and link complex series of queries. For example, when developing an application to display the most popular tracks of an artist based on a music streaming API, one may need to develop an application that performs the following steps:
- use a first query to retrieve an id of an "Artist" object, based on a string of characters representing the name of the artist,;
- use a second query to retrieve, based on the id of the Artist, a list of the records id of the artist, each track being defined by an id;
- use a third query to retrieve, based on the id of the record, a list of the tracks of the record, each track being defined by an id;
- send, for each track a query to retrieve, based on the id, an object representative of the track, defined by a "Track" class;
- identify, in the "Track" class, a property indicative of the popularity of the track ; for example, the "Track" class may contain an attribute representative of the number of times a track was listened to;
- sort the tracks by popularity;
- display the tracks, from the most to the least popular, by retrieving, for each track object, properties such as the name of the track, or a cover.
The creation of such a complex series of queries, response and object analysis thus requires an in-depth study of the Web API and good programming skills.

This is a common task for a developer. However, the development of websites or applications is more and more performed by designers, who have sharp skills in design and interactions, but are usually not familiar with development tasks. It is in particular very difficult for a designer to identify, in APIs that define a large number of objects and properties, the properties he/she is interested in, especially when these properties are found in objects that can only be identified through a plurality of requests and responses.

This issue more generally arises when a designer needs to use assets from a source wherein data is organized in the form of a complex collection of objects and classes. This is for example the case of relational databases.

There is therefore a need for a computing device that provides a designer an immediate overview of the objects and properties that may be of interest to design a website or application amongst data from a complex source, including the objects and properties that are accessed using a string of successive queries, wherein the output of a query is used as input to the next one.

### SUMMARY OF THE INVENTION

To this effect, the invention discloses a designer computing device configured to design an application to be executed on a end-user computing device, said designer computing device comprising: an interface to let a designer select one or more sources from which to obtain on the end-user computing device, based on a definition for one or more end-users, one or more instances belonging to a class to display; an access to a processing logic to perform an application, a generation, or a combination thereof of a set of decision rules to one or more of: determine types of properties of said class to display, or one or more classes of interest in relation to said class to display; determine properties of interest of said class to display, or one or more classes of interest in relation to said class to display and; select one or more properties of interest of said class to display, or of one or more said classes of interest in relation to said classes to display; a generator of end-user computer instructions to be embedded within the application on the end-user computing device, said computer instructions to: procure an interface on the end-user computing device to define, for the one or more end-users, the one or more instances; activate a communication link from the application to the one or more sources to retrieve values of said one or more properties of interest for the one or more instances; update a display of the application based on a layout of the application and said values of said one or more properties of interest for said one or more instances.

Advantageously, the processing logic is configured to determine properties of interest based at least on said types of properties of said class to display, or one or more classes of interest in relation to said class to display.

Advantageously, the processing logic is configured to iteratively identify said one or more classes of interest in relation to said class to display.

Advantageously, the processing logic is configured, to iteratively build a tree wherein each node represents said class to display, or a class of interest in relation to said class to display, by: adding said class to display as the root node of the tree; recursively adding, for each node of the tree, classes of object of interest in relation to said node of the tree as child nodes of said node.

Advantageously, the processing logic is configured to execute a decision rule of selection of said one or more properties of interest of said class to display, or of said one or more classes of interest in relation to said classes to display.

Advantageously, wherein said decision rule of selection is generated by a heuristics defined using a selection machine learning engine fed with decisions previously performed by designers.

Advantageously, the interface is configured to display and highlight said properties of interest.

Advantageously, the interface is configured to let the designer remove properties from or add properties to said one or more properties to display; said one or more properties are used to enrich a training set of the selection machine learning engine.

Advantageously, the processing logic is further configured to generate the layout of the application.

Advantageously, the processing logic is configured to execute a layout machine learning engine to generate the layout of the application; the interface is configured to let the designer modify said layout of the application; the layout as modified is used to enrich a training set of the layout machine learning engine.

Advantageously, classes are defined in a Web API, and said processing logic is configured to select said one or more properties of interest of said one or more classes to display by parsing queries of said Web API.

The invention also discloses a developer computing device configured to create a design tool for a designer computing device, said developer computing device comprising: a machine learning engine to determine one or more properties of interest of a class to display in an application to be executed on a end-user computing device, or of one or more classes of interest in relation to said class to display in the application to be executed on a end-user computing device; a generator of designer computer instructions to be embedded on the designer computing device, said designer computer instructions to cause the designer computing device to generate: an interface to let a designer select one or more sources from which to obtain on the end-user computing device, based on a definition for one or more end-users, one or more instances objects belonging to one or more classes to display; an access to a processing logic to perform an application, a generation, or a combination thereof of a set of decision rules to one or more of: determine types of properties of said class to display, or one or more classes of interest in relation to said class to display; determine properties of interest of said one or more classes to display, or classes of interest in relation to said classes to display and; select one or more properties of interest of said one or more classes to display, or of said classes of interest in relation to said classes to display; a generator of end-user computer instructions to be embedded within the application on the end-user computing device, said computer instructions to: procure an interface on the end-user computing device to define, for the one or more end-users, the one or more instances; activate a communication link from the application to the one or more sources to retrieve values of said one or more properties of interest for the one or more instances; update a display of the application based on a layout of the application and said values of said one or more properties of interest for said one or more instances.

The invention also discloses a machine learning server, said server comprising: an input port to receive, from a designer computing device configured to design an application to be executed on a end-user computing device, a class to display; a machine learning engine to perform an application, a generation, or a combination thereof of a set of decision rules to one or more of: determine types of properties of said class to display, or one or more classes of interest in relation to said class to display; determine properties of interest of said class to display, and/or one or more classes of interest in relation to said classes to display; and select one or more properties of interest of said class to display or of said one or more classes of interest in relation to said classes to display; an output port to send to said designer computing device said one or more properties of interest, to be used to define a layout of said application to be executed on a end-user computing device.

The invention also discloses a end-user computing device configured to execute an application to retrieve from one or more external sources and display one or more properties of interest of one or more instances belonging to a class to display or one or more classes of interest in relation to said class to display, said end-user computing device comprising: an interface to define, for one or more end-users, the one or more instances; a communication link from the application to the one or more sources to retrieve values of said one or more properties of interest for the one or more instances; a processing logic to update a display of the application based on a layout of the application and said values of said one or more properties of interest for said one or more instances.

The invention allows a designer without programming skills to use complex data sources.

The invention simplifies the access and exploration of Web APIs.

The invention allows a designer to use a large number of assets returned by Web APIs for designing websites or applications.

The invention reduces the time necessary to design websites or applications.

In some embodiments, the invention allows designing applications that are better adapted to the needs of the end users, as more decisions from communities of designer are learned by a machine learning engine.

### BRIEF DESCRIPTION OF THE DRAWINGS

The invention will be better understood and its various features and advantages will emerge from the following description of a number of exemplary embodiments and its appended figures in which:
- Figures 1 a and 1b display two examples of a queries of a Web API, and objects returned in response to the query in the prior art;
- Figure 2 displays an example of a tool that provides a designer with an access to a representation of objects from a Web API, in the invention;
- Figures 3a and 3b display two examples of a designer computing device configured to design an application to be executed on a end-user computing device in a number of embodiments of the invention;
- Figures 4a and 4b display two examples of a end-user computing device configured to execute an application in a number of embodiments of the invention;
- Figure 5 displays an example of a tree of properties to be returned by a Web API in a number of embodiments of the invention, and highlighting said properties of interest;
- Figures 6 displays an example of representation of properties of interest in a number of embodiments of the invention;
- Figure 7 displays three examples of layouts of an application that may be automatically generated in an embodiment of the invention;
- Figure 8 displays an example of generation of layout by decision rules generated by heuristics of a machine learning engine, and modifications of the heuristics based on a feedback from a designer in an embodiment of the invention.

### DETAILED DESCRIPTION OF THE INVENTION

In this specification, the invention is described by way of examples relative to the development of applications using a Web API. However, the invention is not restricted to these use cases, and may be also applied to sources of data other than Web APIs, whether they are stored on the cloud, on a Local Area Network, on a desktop of the device, provided however that a source makes available some kind of definition of the structure of their data. In a number of embodiments of the invention sources of data can be stored as databases (such as SQL or NoSQL) or as spreadsheets (such as Excel).

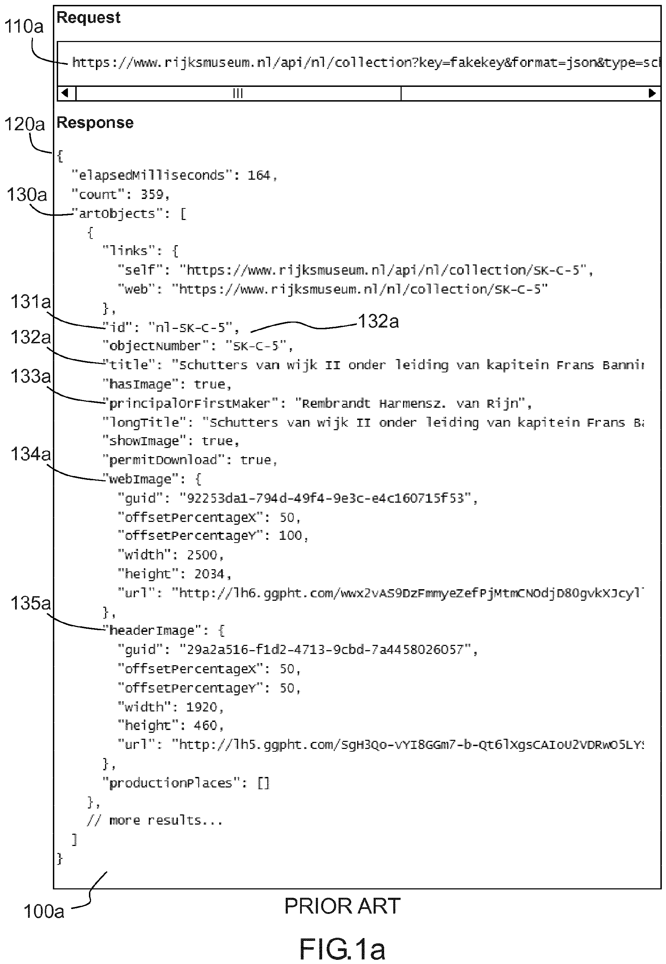

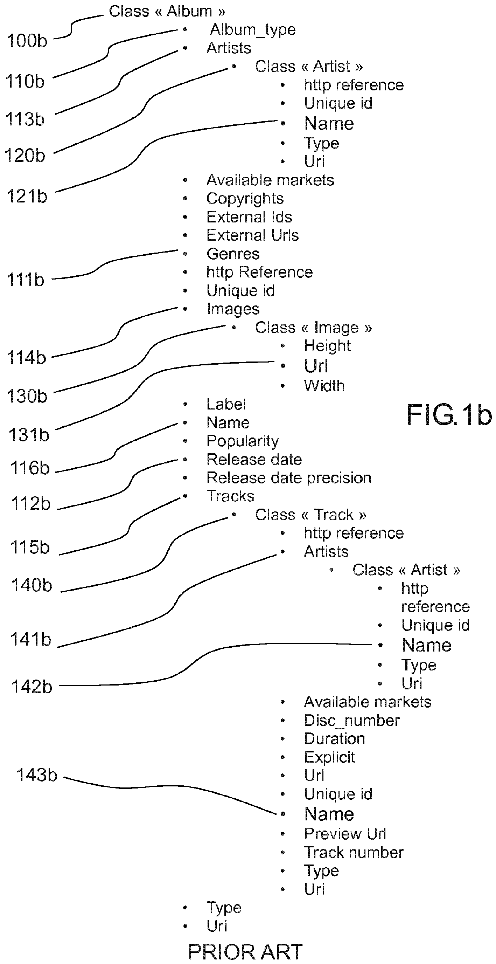

Figures 1 a and 1b display two examples of a queries of a Web API, and objects returned in response to the query in the prior art.

Figure 1a displays a first example of a query of a Web API, and an object returned in response to the query in the prior art, relative to the Riksjmuseum API.

Line 110a represents a request for an object of the Riksjmuseum API, sent using an http request.

Text 120a represents the object returned by the API, represented hierarchically as received in the JSON format.

The request returns a list 130a of "artobjects", the first object of the list being displayed here.

The properties and values are represented in the following way: for example "id": "nl-sk-c-5" means that the property "id" 131 a has a value "nl-sk-c-5" 132a. The properties and values provide various information regarding the object. For example, it comprises a unique id 131 a, the title of the picture 132a, the principal artist 133a, and two images 134a and 135a each having its own id, height, width, and url.

The use of an object in the form of text 120a is not intuitive for a designer, because of the potential high number of properties, and the form of the display. It may also be difficult for a designer to choose which properties to use in his or her further design. For example, it may be difficult for a designer to select an image amongst image 134a and image 135a.

Figure 1b displays a first example of a query of a Web API, and an object returned in response to the query in the prior art, relative to the Spotify API.

Figure 1b displays, in a synthetic manner, the properties of the "Album" class, as well as the classes in relation to the "Album" class and their properties. It also displays the properties that are selected as properties of interest in an embodiment of the invention. However, the invention is not restricted to this class, and may be applied to any class of any Web API, or any data source that makes available a kind of data structure.

The "Album" class 100b has a number of properties. The properties of the "Album" class are noted in the first row, and comprise for example an "Album_type" property 110b that represents the type of album, a "Genres" property 111 b that lists the music genre to which the album may be linked, a "Release date" property 112b that defines the date when the album was released, or a "Name" property 116b that defines the name of the album.

The properties listed above are defined by a single value. On the other hand, some other properties define a list of instances of classes in relation to the class to display. For example, the "Artists" property 113b contains a list of instances of the "Artist" class 120b; the "Images" property 114b a list of instances of the "Image" class 130b; the "Tracks" property 115b a list of instances of the "Track" class 140b. The "Track" class contains itself an "Artists" property 141b that contains a list of artists, belonging to the "Artist" class 120b. It shall be noted that the double appearance of the "Artist" class allows defining different artists for the whole album, and for each track.

It is possible to retrieve, based of the id of instance objects of classes in relation to the class "Album" 100b, to retrieve further information, for example using the following properties:
- "Name" 121 b of the "Artist" class 120b, whose value is the name of the artist of the album;
- "Url" 131b of the "Image" class 130b, that contains an url to an image representative of the cover of the album ;
- "Name" 142b of the "Artist" class, when the instances of the artist class are properties 141 b of the "Track" class 140b that defines all artists for each track;
- "Name" 143b of the "Track" class that defines the name of each track.

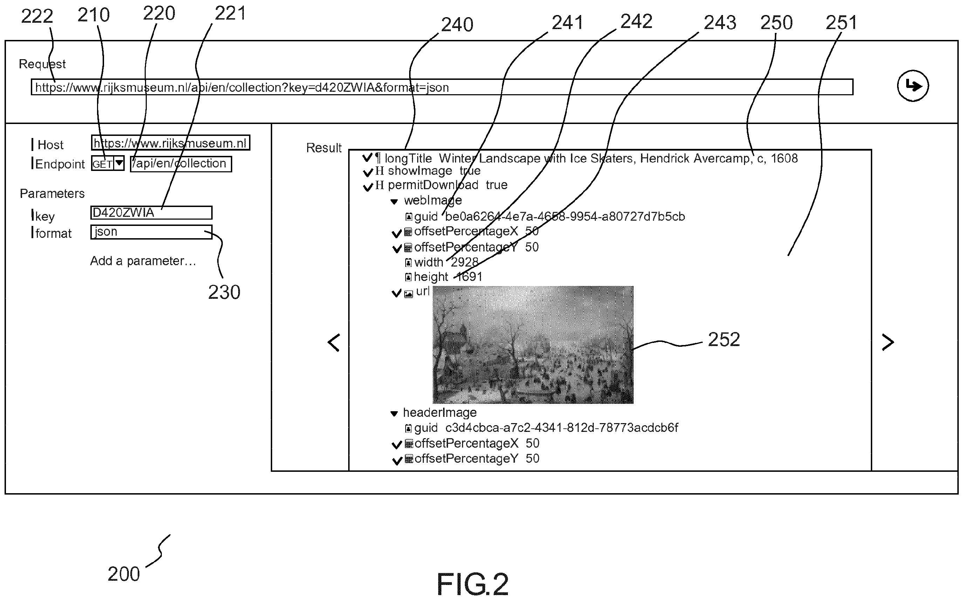

Figure 2 displays an example of a tool that provides a designer with an access to a representation of objects from a Web API, in the invention.

The tool comprises an interface 200 to browse objects from the Web API. The objective of the tool is to retrieve from Web APIs assets to be integrated within applications.

The interface comprises an input box to enter the keywords corresponding to the scope of the application or website to be generated. Keywords can be entered in a conversational ways e.g. "displays all records from Pink Floyd".

Based on keywords entered, the interface comprises a scroll menu 210 to list the http command to use, and a text field 220 to input an URL as parameter of the command. The element 230 defines the format of the command. Different languages exist for using results of calls to Web APIs, for example the XML (extended Matkup Language) or the JSON (JavaScript Object Notation) languages, which is used in this example. The designer can also enter directly an http address corresponding to an object to display.

The example displayed in figure 2 relates to the Riksjmuseum API, that allows retrieving objects representative of pictures from the Dutch museum Rijksmuseum of Amsterdam, but the tool may be used to display objects from any other API. The tool displays the object which is retrieved when sending the html command "GET" with the url 220, which is a unique URL corresponding to the object. In the example, the object is an image displaying one of the pictures of the Riksjmuseum. In the course of the description, the term "class" will designate an abstract class that defines a type of object with properties. On the contrary, the term "instance" will designate an actual instance of object of the class, wherein each property has a value. In the example displayed in figure 2, the class of object is an abstract class "Painting", while the instance is the painting whose Property "Name" is "Winterlandschap met schaatsers", that is an instance belonging to the "Painting" class.

The interface 200 further comprises a column 240 displaying properties of the object, followed by (250) the display of the values of the properties. For example, the object has a property "id" 241, with a value "nl-SK-A-171 B" 251; a property "width" 242, with a value "2928", a property "url" 243, whose value is an url that contain an image 252.

The interface 200 provides a straightforward representation of the objects, wherein each property and value are displayed directly. An interface like interface 200 may become difficult to use for objects with a large number of properties, properties. The high number of values displayed, many of them concerning properties that does not interest the designer, render the interactions of the user of the interface by the designer more difficult.

The interface 200 may be used either to display a class, or to display an instance. When the interface 200 is configured to display a class, it is configured to display each property of the class, with the name of the property. It may also be configured to display a descriptor of each property. When the interface 200 is configured to display an instance, it may be configured to display both the name of each property, and the value of this property for a the instance. Displaying an instance allows a user having a more concrete understanding of the meaning of the properties of the class. It also allows a user to browse the content made available by the API in an efficient manner. The interface 200 also allows a user to validate that content, by allowing him/her to quickly and efficiently visualize the content.

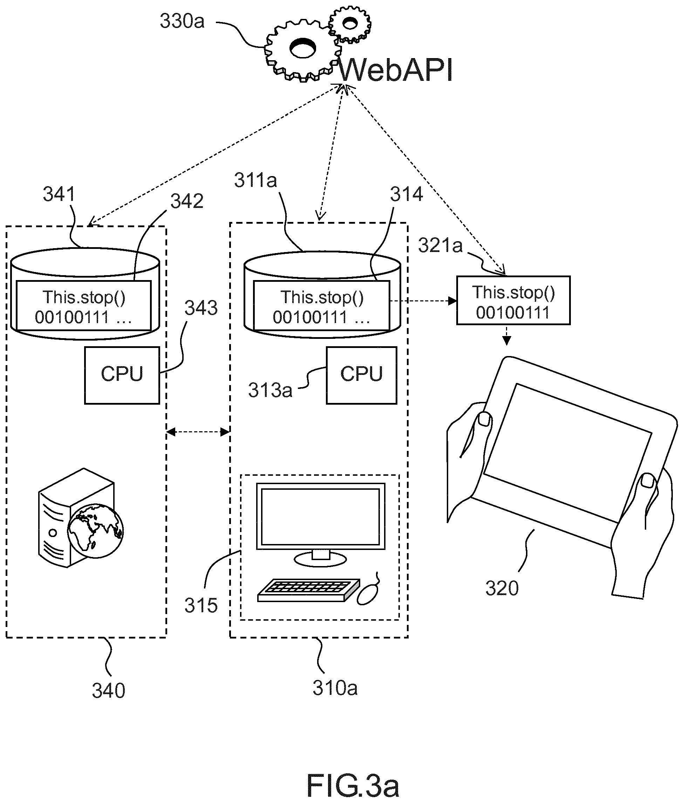

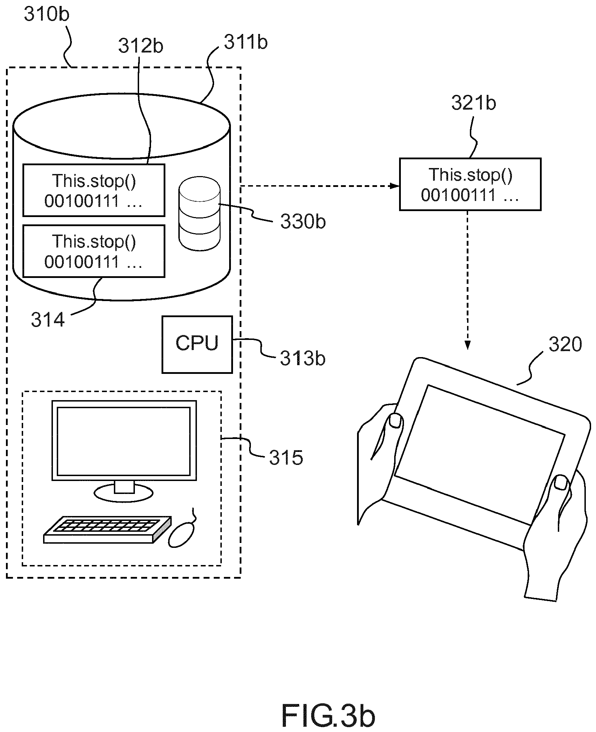

Figures 3a and 3b display two examples of a designer computing device configured to design an application to be executed on a end-user computing device in a number of embodiments of the invention.

Figure 3a displays a first example of designer computing device configured to design an application in an embodiment of the invention, wherein the source of data is a web API, and wherein the generation or execution of decision rules is performed on a server.

The designer computing device 310a is configured to let a designer design an application, to be executed on a end user computing device 320. The designer computing device 310a comprises an interface 315. The interface 315 comprises for example a screen, a keyboard or a mouse. In various embodiments of the invention, the interface comprises any means that allow a designer interacting with the computing device, such as for example a touch screen, a voice recognition software to receive instructions by voice, etc... The interface 315 is configured to let the designer select a data source, from which to obtain one or more instance belonging to a class to display. A number of different embodiments are possible for selecting a data source. For example, the user may enter an url or another identifier of the data source. The user may also find the data source through a search, for example using a keyword. Thus, the interface 315 allows the designer identifying both the data source, and a class to display. The selection of the data source and the class to display can be performed by using a GUI (Graphical User Interface) or any kind of HMI (Human Machine Interface). All the examples in the description disclose a single data source and a single class to display. However, the invention is not restricted to these examples, and may be used for more than one data source, and more than one class to display. This data source may be selected, for example by entering a keyword to a search engine, or by entering an address of the data source.

The designer computing device 310a comprises a processor 313a, a storage 311 a storing the second set of instructions 314. The processor 313a is configured, when loading the second set of instructions 314, to generate end-user computer instructions 321 a to be embedded within the application on the end-user computing device 320.

In this example, the generation or execution of decision rules is performed by a server 340 rather than the designer computing device 310a. To this effect, the server 340 comprises a processor 343 and a storage 341 storing the set of computer instructions 342, to one or more of:
- determine types of properties of said class to display, or one or more classes of interest in relation to said class to display;
- determine properties of interest of said class to display, or one or more classes of interest in relation to said class to display and,
- select one or more properties of interest of said class to display, or of one or more said classes of interest in relation to said classes to display.

The designer computing device 310a shares a communication link with the server 340, sends a request to the server 340 to determine and select properties of interest, and receives the desired properties of interest as a result.

According to various embodiments of the invention, the communication between the designer computing device 310a and the server 340 can be direct. In these embodiments, the server 340 receives data from and sends data to the designer computing device 310a directly. In some embodiments of the invention, the communication between the designer computing device 310a and 340 can be indirect. In these embodiments, the server 340 receives data from and sends data to the designer computing device 310a indirectly, for example through one or more servers.

In some embodiments of the invention, this allows a designer using the designer computing device having a friendly overview of the properties of the object that he/she may be interested in for developing the application. In other embodiments of the invention, the processor 313a may be configured, when loading the first set of instructions 312a, to generate a representation of the class of object to display without additional input from the user. Different embodiments of the determination and selection of the properties of interest will be presented with reference to the subsequent figures. In some embodiments of the invention, this also allows determining a type of a properties of the class of interest or classes in relation ot the class of interest. The determination of the type of a property may be interesting, because each API defines its own properties for the classes, which are a priori unknown. The determination of the type of a property consists in associating the property to a known property type. This may be useful, for example to provide a better selection of the properties of interest, or to generate the layout of the application more efficiently.

In order to communicate with the designer computing device 310a, the server 340 comprises an input port to receive from the designer computing device 310a the class to display, and an output port to send to the designer computing device 310a the one or more properties of interest, the types of properties, and/or the layout of the application.

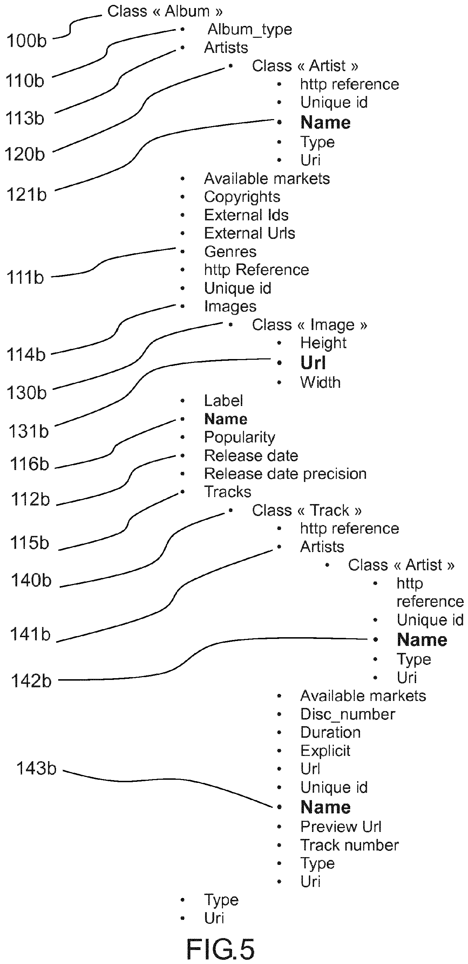

In a number of embodiments of the invention, the generation and/or execution of decision rules is performed by a machine learning engine. The machine learning engine may apply and/or generate decision rules to determine types of properties, and/or determine and select the properties of interest. The decision rules will be explained in greater details with reference to figure 5. However, it shall be understood that decision rules may be any kind of rule or series of operations allowing determining types of properties, and/or determining or selecting the properties of interest. The possible decision rules comprise for example pre-defined rules, user-defined rules, or rules generated using machine learning heuristics, such as rules generated by a trained neural network. The server 340 may be used by a plurality of designers, in order to generate rules based on the highest number of designer choices, and thus having machine learning engine trained on a larger dataset. Possible machine learning algorithms are described in more details with reference to figure 5. More specifically, in embodiments wherein the server 340 uses a machine learning engine, the machine learning engine is used to determine types of properties, and/or determine the properties of interest. The user may then choose the properties of interest he wishes to use. The choices of the user may be used as a feedback to train the machine learning engine. The machine learning engine may thus adapt the decision rules of selection to best match the preferences of the user. Another type of feedback of the user relates to the type of properties: the type that has been determined by the machine learning engine may be displayed to the user, which may confirm or infirm the determination of the property of interest.

In this example the source is a Web API 330a available online. It is possible to obtain instances from Web APIs, for example by sending http requests to a server. It is thus possible to access the Web API 330a from the designer computing device 310a, from the server 340 or from the end-user computing device 330. The access to the Web API 330a from the designer computing device may be performed either directly, or through the server 340.

This allows sharing the decision rules of determination of property types, or determination and selection of properties of interest between a large number of designers, and easily update the decision rules, the adaptation of decision rules may be done directly on the server for all users.

The processor 313a is configured, when loading the second set of instructions 314, to generate end-user computer instructions 321 a to be embedded within the application on the end-user computing device 320.

The end-user computer instructions 321 a are configured, when executed by the end-user computing device 320, to:
- procure an interface on the end-user computing device to define, for the one or more end-users, the one or more instances;
- activate a communication link from the application to the one or more sources to retrieve values of said one or more properties of interest for the one or more instances;
- display on the end-user computing device a layout of the application defined based on said values of said one or more properties of interest.

Figure 3b displays a second example of designer computing device configured to design an application in an embodiment of the invention, wherein the source of data is a local database, and wherein the generation or execution of decision rules is performed locally.

The designer computing device 310b comprises the interface 315, a storage capability 311b, and a processor 313b. In this example, the data source is a database 330b stored in the storage capability 311b storing the second set of instructions 314. The source database 330b can be any kind of database that makes available some kind of definition of the structure of their data. The database may be for example a relational database, an object database, a key-value database, or any other database that has a data structure that can be accessed. The source database is not necessary a database, in the ordinary meaning in computing science. It may also be a file, with an explicit or implicit structure, such as a XML file, or a spreadsheet (Excel) file.

The storage capability 311b further comprises two sets of computer instructions 312b and 314.

The processor 313b is configured, when loading the set of computer instructions 312b, to one or more of:
- determine types of properties of said class to display, or one or more classes of interest in relation to said class to display;
- determine properties of interest of a class to display, or one or more classes of interest in relation to said class to display and;
- select one or more properties of interest of said class to display, or of one or more said classes of interest in relation to said classes to display.

In some embodiments of the invention, this allows a designer using the designer computing device having a friendly overview of the properties of the object that he/she may be interested in for developing the application. In other embodiments of the invention, the processor 313b may be configured, when loading the first set of instructions 312b, to generate a representation of the class of object to display without additional input from the user. Different embodiments of the determination of property types, the determination and selection of the properties of interest will be presented with reference to the subsequent figures.

The processor 313b is configured, when loading the second set of instructions 314, to generate end-user computer instructions 321 b to be embedded within the application on the end-user computing device 320.

The end-user computer instructions 321 b are configured, when executed by the end-user computing device 320, to:
- procure an interface on the end-user computing device to define, for the one or more end-users, the one or more instances;
- activate a communication link from the application to the one or more sources to retrieve values of said one or more properties of interest for the one or more instances;
- display on the end-user computing device a layout of the application defined based on said values of said one or more properties of interest.

In an embodiment of the invention, the database 330b can be copied onto the end-user computing device, or packaged within the application in the end-user computing device, so that the application has access to the database to display instances. Other embodiments are possible. For example, the database may be available using an online service.

In the example of figure 3b, the determination of property type, determination and selection of properties of interest, and the generation of end-user instructions are performed by the processor 313b, loading the two sets of computer instructions 312b and 314. However this may be performed by other types of processing logic. For example, a designer computing device in other embodiments of the invention may comprise two different processors, for loading and executing the two sets of instructions. The determination and selection of properties of interest, and the generation of end-user instructions may also be performed by specific circuits, such as ASICs (Application Specific Integrated Circuits).

The designer computing device 310b thus allows a designer to easily design applications with rich content from various data sources. Indeed, the designer is able to build an application using a class to display, by solely selecting the data source and the class to display. It shall be understood that the term "application" in the course of the instant patent application shall be understood in a broad and general sense. The application may be a stand-alone application, but also a code that may be interpreted by a VM, or a model of application wherein the application code is an XML file which is interpreted by a VM (Virtual Machine), or JSON code.

In a number of embodiments of the invention, the determination and selection of properties of interest is performed by a machine learning engine. The machine learning engine may be executed by a developer computing device that executes the machine learning engine and then generates computer instructions to be embedded within the designer computing device and comprising the decision rules generated by machine learning engine.

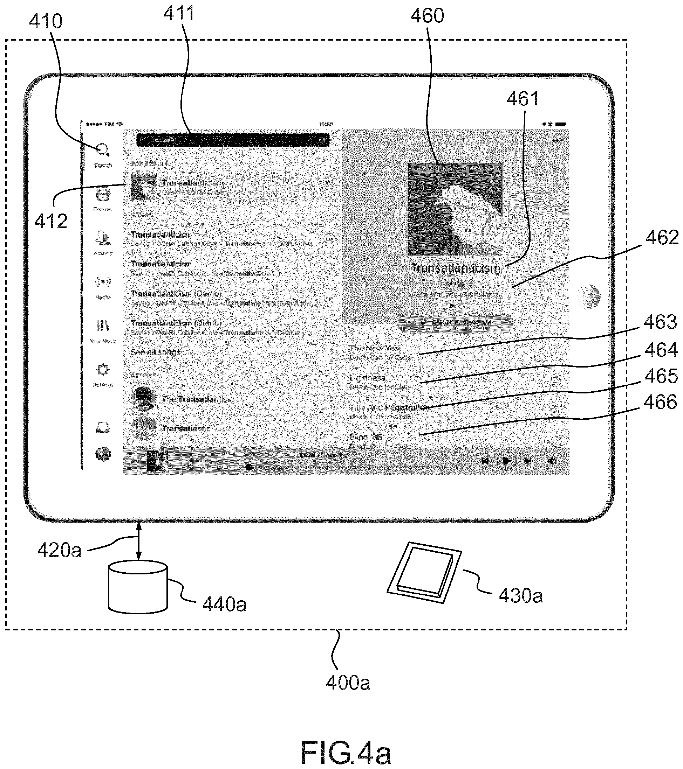

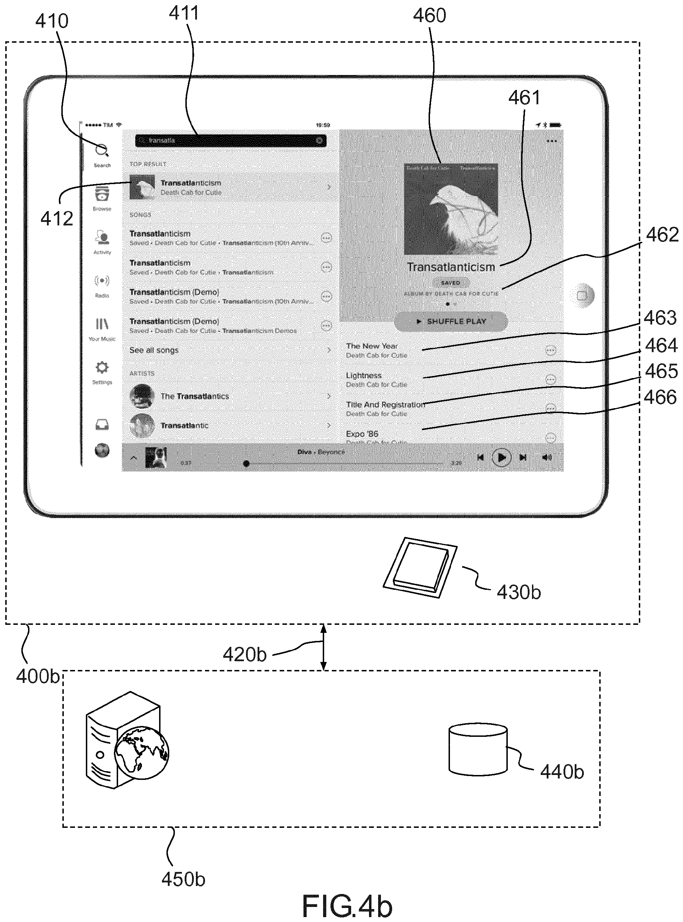

Figures 4a and 4b display two examples of a end-user computing device configured to execute an application in a number of embodiments of the invention.

Figure 4a displays a first example of a end-user computing device configured to execute an application in a number of embodiments of the invention.

The end-user computing device 400a of figure 4a is a tablet. However the invention is not restricted to this example, and a end-user computing device of the invention may be a Personal Computer (PC), a tablet, a smartphone, a PDA (Personal Digital Assistant) or any personal device with computing capabilities. In some embodiments of the invention, the end-user may by the designer him/herself. For example, the designer may wish to test his/her application, on a specific end-user device. The end-user device for testing the application may also be the designer computing device itself. In this case, the designer uses both the designer computing device 310a or 310b, and the end-user computing device 400a.

The end-user computing device 400a is configured to execute an application to retrieve from one or more external sources 440a and display one or more properties of interest of one or more instances belonging to a class to display or one or more classes of interest in relation to said class to display.

It shall be understood that the external source is deemed to be external to the application, but not necessarily to the end-user computing device. In the example displayed on figure 4a, the external source 440a is a database onboard the device. In other examples, the external source may be a database located on a server on a Local Area Network (LAN), or a data source located in one or more servers accessed through an Internet connection.

The selection of the class to display, and properties of interest by a designer is described in details with reference to figures 3a and 3b. The class to display, and the properties of interest are thus predefined in the application, when the end-user computing device executes the application. On the contrary, the external data source may be continuously enriched with new content. For example, the database 440a of the end-user computing device 400a may be synchronized with a server, and automatically updated when new data is added on the server.

Figures 4a and 4b display examples of embodiments of the invention where the application is an music streaming application. The database 440a thus stores instances of classes such as music albums, artists, tracks, etc... More specifically, the examples displayed in figures 4a and 4b display a layout of the application, configured to display an album.

In this example the class of interest is thus the class album, and the layout is configured to display the properties of interest listed below:
- The cover 460 of the album;
- The name 461 of the album;
- The name 462 of the artist that released the album;
- The names 463, 464, 465, 466 of tracks of the album;
- The names of the artist of each track, for example the name 467. In this case a single artist is cited for all the tracks. In other examples some artists may be invited on some tracks.

These properties of interest may be properties of interest of the class to display (class "Album" in the example). For example, cover 460 and name 461 are usually properties of a class "Album". They may also be properties of interest of a class of interest in relation to the class of object to display. For example, the name 462 of the artist who released the album is in this example an attribute of a class "Artist". The class "Album" has an attribute "Artist". However this contains a unique id which refers to the instance of the class "Artist" corresponding to the artist who released the album. This unique id is used to retrieve the object artist, and the value of the name of the artist. Similarly, the class "Album" has another property with a list of unique ids corresponding to the tracks of the album. These unique ids allow retrieving instances of the class "Track", and read the names of the tracks.

However, the invention is not restricted to these examples, and may be used seamlessly for any application, any class to display, and any property of interest in relation to any class to display, or any class of interest in relation to a class to display. The class to display may be either a class whose display is interesting by itself, for example the cover of an audio album, or a class whose display allows a user performing a service, for example a "Text message" class that allows sending a text message in APIs that allows sending text messages.

The end-user computing device comprises an interface 410 to define, for one or more end-users, the one or more instances. In this example the interface consists in a field 411 for entering the first letters of the name of the album. The albums in the database 440a whose name or artist match, at least in part the letters that has been entered in the field 411 are then displayed in the form of small descriptors in the field 411. The user then may click on one of the descriptors, to display the corresponding instance of an album. The invention is not restricted to this interface, and the invention is applicable to any interface to allow the end-user to define the desired instance. Such interfaces comprise for example exhaustive lists of albums that may be displayed, for example the list of all albums in a music library.

The end-user computing device comprises a communication link 420a from the application to the one or more sources to retrieve values of said one or more properties of interest for the one or more instances. In this example, the link is an access to the database 440a stored on the end-user device. The link 420a allows retrieving the values of properties of interest of instances of the class to display, as well as values of properties of interest of classes of interest in relation to said class to display.

The end-user computing device further comprises a processing logic 430a to display a layout of the application defined based on said values of said one or more properties of interest. The processing logic 430a is configured to retrieve the values of properties of interest, and update the layout of the application based on the values of properties of interest.

The end-user computing device of the invention thus allows focusing on the properties of interest that have been defined by or for the designer.

Figure 4b displays a second example of a end-user computing device configured to execute an application in a number of embodiments of the invention.

The end-user computing device 400b is very similar to the end-user computing device 400a.

However, in the end-user computing device 400b the one or more external sources 440b are one or more databases on one or more servers 450, and the communication link 420b to the one or more external sources is a remote connection 420b to the servers. In an embodiment of the invention, the database and servers are accessed using a Web API.

The end-user computing device 400b comprises a processor 430b configured to use the communication link 420b to retrieve the values of properties of interest for an instance, and update the display of the application based on said values of properties of interest. It may also update the display, when the end-user changes the instance to display. For example, if the end-user whishes to display the album "Thriller" then the album "Bad" of Michael Jackson, the processor 430b is configured to retrieve the corresponding values of the title of the album, and update the corresponding field of the layout of the application, to update the display to another album.

Figure 5 displays an example of a tree of properties to be returned by a Web API in a number of embodiments of the invention

In a number of embodiments of the invention, the processing logic 312b or 342 is configured to iteratively identify said one or more classes of interest in relation to said class to display. This may be performed, for example, by verifying, when properties of a class to display refer to other classes, which are these classes and their properties. In many cases these other classes may be classes of interest, because their properties may be valuable to display for the designer. The iterative identification of classes allow a designer using all properties that may have an interest, whether they are properties of the class of object to display, or classes of interest in relation with said class to display.

The definition of the tree may be performed, for example, by building a tree wherein each node represents a class to display or a class of interest in relation with the class to display, and has a number of properties. The tree can be built adding the class of object to display as the root node of the tree, and recursively adding, for each node of the tree, classes of object of interest in relation to said node of the tree as child nodes as child nodes of the said node.

In some embodiments of the invention, an API returns, as a single response, an instance belonging to the class to display, and instances of classes of interest in relation to the class to display. In other embodiments of the invention, certain properties of the class to display are unique ids of instances of classes of interest in relation to classes to display. In this case, the processing logic 312b or 342 may be configured to parse descriptors of the Web API to build a tree with all properties of classes in relation to the class of object to display.

In this example the class to display is a class "Album" of the Spotify API.

The example of figure 5 is based on the properties of the class "Album" 100b of figure 1b, and the classes in relation to the class "Album" 100b.

In a number of embodiments of the invention, once the designer has selected a class to display, for example the "Album" class 100b, the processing logic 312b or 342 is configured to execute a decision rule of selection of properties of interest. The example displayed in figure 5 relates to the selection of properties for designing the applications displayed in figures 4a and 4b. This is provided by means of example only, and other decision rules of selection may be applicable. The use of an automatic decision rule of selection allows a designer, by simply providing as input that he/she wishes to display an album, to have a complete selection of the most interesting properties, not only of the "Album" class 100b, but also of classes of interest in relation to the "Album" class 100b, such as the "Artist" class 120b, the "Image" class 130b, the "Track" class 140b, or the "Artist" class when the artists are defined as a property 141 b of the "Track" class 140b.

In this example, the decision rules of selection have led to the selection of the following properties:
- "Name" 121 b of the "Artist" class 120b, to display the name of the artist of the album 462;
- "Url" 131b of the "Image" class 130b, that contains an url to an image representative of the cover of the album to display 460;
- "Name" 116b of the album, to be displayed 460;
- "Name" 142b of the "Artist" class, when the instances of the artist class are properties 141 b of the "Track" class 140b. This allows displaying the names of all artists for each track 467;
- "Name" 143b of the "Track" class, to display the name of each track 463, 464, 465,466.

In a number of embodiments of the invention, the decision rules are predefined algorithmic rules of selection of properties of interest. For example, a rule may consist in selecting all properties named "Name" or "Image".

In other embodiments of the invention the decision rule of selection is generated by a machine learning heuristics fed with previous decisions.

In a number of embodiments of the invention, the processing logic 312b or 342 is configured to determine types of properties of said class to display, or one or more classes of interest in relation to said class to display.

Machine learning algorithms generally rely on a model that classifies input data. In the invention, machine learning algorithms can be used to determine the type of each property and then classify each property into either a property of interest / not a property of interest. In some embodiments of the invention, the processing logic is configured to determine the types of properties, without determining properties of interest. This is for example useful, in embodiments wherein a layout is generated using all the properties.

The types of properties can be defined using a predefined set of labels. During the training phase, the heuristics is trained with properties that have already been labeled with using one of the labels of set of labels.

According various embodiments of the invention, the set of labels may comprise any labels that may have an interest regarding properties of an API. For example, it may comprise the following labels:
∘ Content:
   ▪ Image, video, PDF, Web page, Proper noun, Short/long Description, Number (Currency, Measure unit, quantity, etc.), Color, etc.
∘ Layout
   ▪ Size (height, width, etc.)
   ▪ Date/time
   ▪ Geographic coordinate (long/lat), Addresses
∘ Pagination
∘ Authentication (API keys, User ID)
∘ Link to other Web API calls
∘ Various kinds of IDs
∘ Other type such as Boolean or Enumerated

The determination of properties of interest can be performed by a heuristics trained with previously performed labels relative to the interest of properties. Input data to classify each property into a property of interest or not a property of interest may comprise one or more of:
- The type of the property
   ∘ Content:
      ▪ Image, video, PDF, Web page, Proper noun, Short/long Description, Number (Currency, Measure unit, quantity, etc.), Color, etc.
   ∘ Layout
      ▪ Size (height, width, etc.)
      ▪ Date/time
      ▪ Geographic coordinate (long/lat), Addresses
   ∘ Pagination
   ∘ Authentication (API keys, User ID)
   ∘ Link to other Web API calls
   ∘ Various kinds of IDs
   ∘ Other type such as Boolean or Enumerated
- The name of the property;
- A complete hierarchy of names of classes and property. For example, the "Name" property 142b may be referred to under the name "Track/Artist/Name";
- The depth of the property, i.e the number of nodes in the tree to reach the property from the root node. For example, the "Name" property 116b has a depth of 1, while the "Name" property 142b has a depth of 3;

Modeling tools to be used for implementing the invention may belong to the field of pattern recognition systems. The initial training set might be built on available results from already developed applications. The training set comprises a set of properties of classes of Web APIs, and, for each property, an associated label. The training of the machine learning engine then consists in tailoring the decision rules, in order to have the best possible decision of labels based on the various characteristics of the properties.

Different algorithms can be used, alone or in combination, to identify patterns in a large database of designer choices, and provide a selection of properties to the designer in a very short time.

A number of statistical models can be used alone or in combination to implement the invention. Among the models used in the art of pattern recognition, we can cite: Random forests (RF) models, where classes are built from decision trees; Similarity/dissimilarity measurement models,: where classes are built from a measure of the dependency (independency) between the sets of choices.

Possible models for implementing the invention comprise:

Fuzzy models: for reference, see for instance, "Fuzzy Models for pattern Recognition", Method that search for structures in Data ISBN 0-7803-0422-5.

Artificial neural networks (ANN) models: for reference, see for instance:

"Neural Networks" Theoretical Foundations and Analysis ISBN 0-87942-280-7;
"Artificial Neural Networks" Paradigms, applications, and hardware implementations ISBN 0-87942-289-0 ; "Artificial Neural Network Learning: A Comparative Review" in Methods and Applications of Artificial Intelligence Lecture Notes in Computer Science, Volume 2308, 2002, pp 300-313 'Neural networks and statistical techniques: A review of applications' in Expert Systems with Applications Volume 36, Issue 1, January 2009, Pages 2-17.

Support *Vector Machine (SVM): for reference, see for instance, "*Review and performance comparison of SVM- and ELM-based classifiers" in Expert Systems with Applications Volume 36, Issue 1, January 2009, Pages 2-17*.*

Hierarchical Clustering Analysis (HCA): for reference, see for instance: http://math.stanford.edu/∼muellner.

Adaptive Resonance Theory (ART) is one of the most efficient models for the type of applications of the invention. Adaptive Resonance Theory is a cognitive and neural theory of how the brain autonomously learns to categorize, recognize, and predict objects and events in a changing world. Central to ART's predictive power is its ability to carry out fast, incremental, and stable unsupervised and supervised learning in response to a changing world. ART specifies mechanistic links between processes of consciousness, learning, expectation, attention, resonance, and synchrony during both unsupervised and supervised learning.

For reference, see for instance: "Adaptive Resonance Theory: How a brain learns to consciously attend, learn, and recognize a changing world", Stephen Grossberg, Centre for Adaptive Systems, Boston University, Neural Networks, Elsevier Ltd, 2002; An Embedded system for real time gas monitoring using an ART2 neural network, Jung-Hwan Cho*, Chang-Hyun Shim**, In-Soo Lee+, Duk-Dong Lee*, and Gi-Joon Jeon, School of Electrical Engineering and Computer Science, Kyungpook National University, Daegu, Korea, ICCAS2003 October 22-25.

More than a model may be applied concurrently on the same choices or variables constructed from the choices. Then, a voting or a fusion scheme may be applied, based on a heuristic which may take into account human expertise, and/or the history of the identifications, and/or a mathematical definition of a best-fit criteria.

Using machine learning algorithms, the determination can be performed by extracting a vector characterizing a property. The vector may comprise a number of so-called features that are relevant to the determination of property type and thus its potential interest for the designer. Features may be based on property's value lexical content (i.e. count and position of numbers, letters, other signs), property context (such as API host and endpoint, sibling properties and parent classes) or dictionary (i.e. various values that are equivalent).

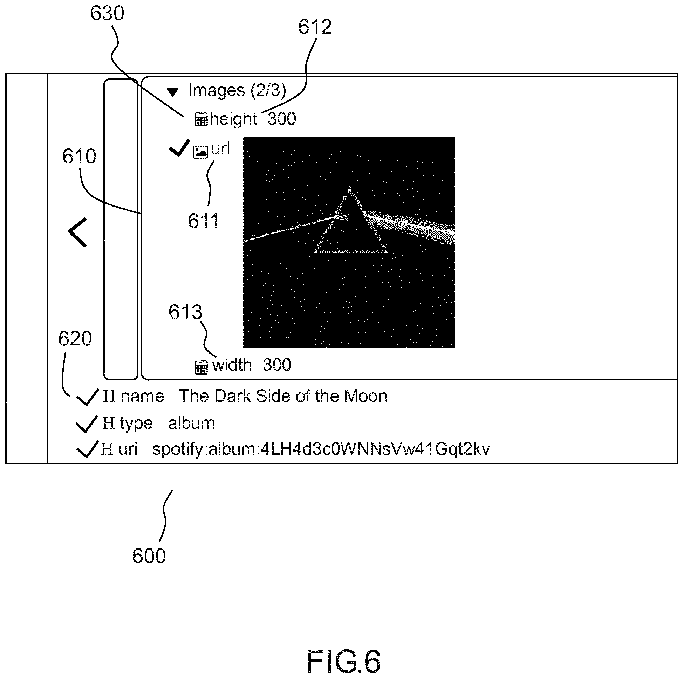

Figure 6 displays an example of representation of properties of interest in a number of embodiments of the invention.

The interface 600 is configured to display to the designer properties of a class to display, focusing on an instance.

As with previous examples, the class to display is the "Album" class of the Spotify API. The interface 600 displays the different properties, with their values for the instance, which is the album "The Dark Size of the Moon" from Pink Floyd. When a property is an instance belonging to another class, which has itself its own properties, this further instance is represented within a square, such as the "Image" instance 610. The interface 600 is configured to highlight properties of interest, for example:
- the "Name" property 620, that corresponds to the "Name" property 116b and represents the name of the album;
- the "url" property 611 of the "Image" class, that corresponds to the property of interest 113b, and represents the cover of the album.
- The "height" and "width" properties of class "Image" 130b are deemed as of no interest.
The interface 600 is also configured to show the discovered type (630) of each property.

This representation allows a designer having an immediate representation of the properties that he/she may be interested in. In other embodiments of the invention, only the properties of interest are displayed.

In a number of embodiments of the invention, the interface 600 is configured to let the designer choose if the properties that have been selected by the machine learning engine are indeed properties of interest. The designer thus may keep a selected property as a property of interest, deselect a property as property of interest, and/or select other properties as properties of interest. These choices may be used to further train selection models. For example, the choices at the output of the selection model may be sent to a machine learning server in order to further refine the selection model.

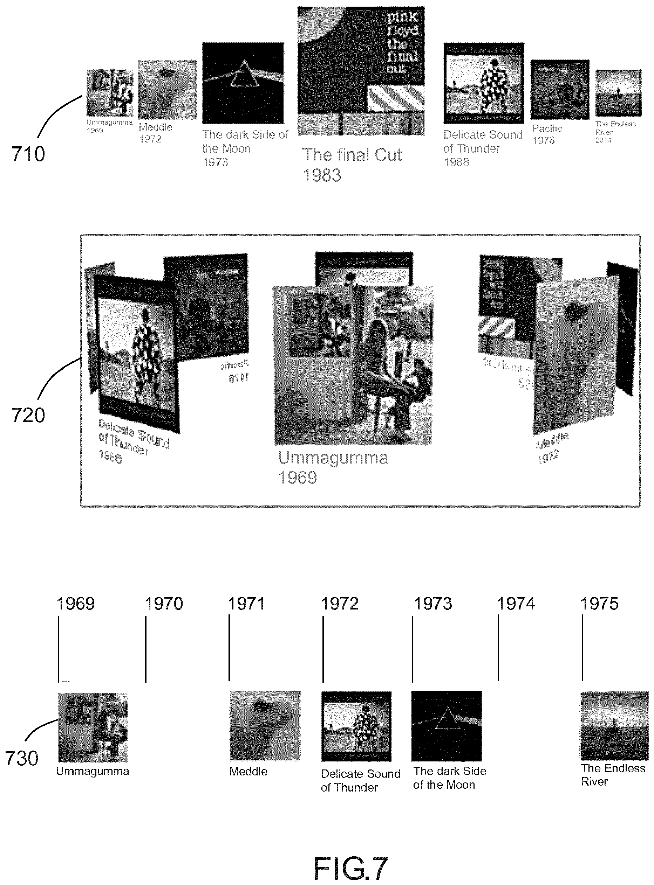

Figure 7 displays three examples of layouts of an application that may be automatically generated in an embodiment of the invention.

The three examples of layout all display a plurality of music albums, the properties of interest being the name of the album, the release year, and the cover of the album.

The representation 710 displays albums in a line, with variable size.

The representation 720 displays albums as a "carrousel", where it is possible to generate a rotation of the carrousel to change the album on the foreground of the carrousel.

The representation 730 displays albums in a time line, sorted by release year.

These 3 representations are provided by means of example only, and many other representations of music albums are possible. Generally, the most common representations used in a type of applications may be classified in a number of different categories. For example, representation 710 may be classified in a category "focus line", representation 720 in a category "carrousel", and representation 730 in a category "time line".

In a number of embodiments of the invention, the definition of the properties of interest allows automatically selecting/defining the best suited layout. The selection or definition of the best suited layout may be performed either by the designer computing device, or a server, for example server 340.

In an embodiment of the invention, decision rules of definition or selection of a layout of the application based on the properties of interest are generated by heuristics of a machine learning algorithm. Such algorithm may be used for classifying sets of properties of interest into a class of layout. The classification may be further performed using preferences of a designer, preferences in a country or a region, or any relevant parameter. The heuristics of the machine learning algorithm may consist in generating rule to have the best predictions, in a training set of decisions, the class of layout based on labels of the properties of interest. They may also consist in generating rule to have the best prediction of parameters of a class of layout based on labels of the properties of interest. The parameters of a class of layouts may be for example the fonts, font sizes, other police parameters, such as the possibility for a title to be bold or italic, etc...

In a number of embodiments of the invention, the parameters are applied based on a previously performed determination of a type of property. For example, a heuristics may consist in defining fonts type, size and color a property labeled as "Title".

Any of the algorithms cited for the determination of property types, or the selection of the properties of interest, or combination thereof, may be used to select a layout to use for displaying a set of properties of interest. Such machine learning algorithm may be fed with already designed applications sharing the same models.

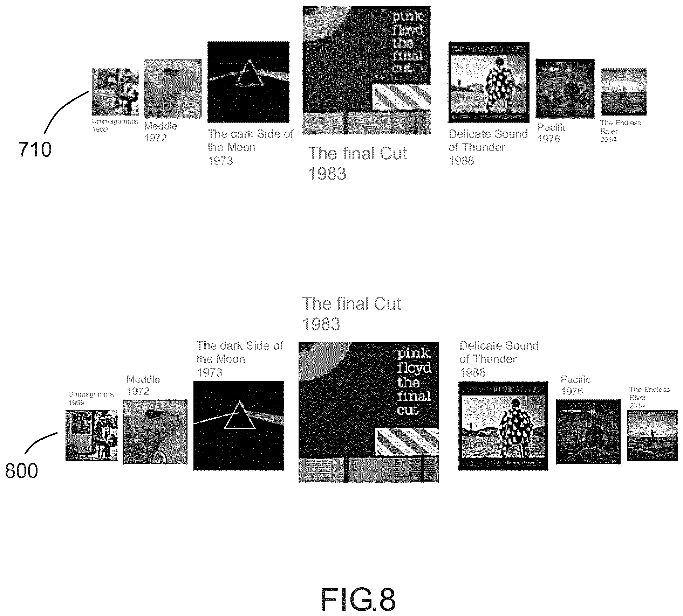

Figure 8 displays an example of generation of layout by decision rules generated by heuristics of a machine learning engine, and modifications of the heuristics based on a feedback from a designer in an embodiment of the invention.

The example of figure 8 is based on the designer computing device 310a, wherein the decision rules for determining properties of interest, and generating the layout of the application, is executed by the server 340. However, it is possible to apply the same scheme on other designer computing devices of the invention, such as the designer computing device 310b, provided that the properties of interest are determined, and the layout generated, by a machine learning engine.

In this example, a layout "line" 710 of the application is generated by the server 340 by executing a machine learning engine. The class to display is an "Album" class, and the properties of interest that have been selected are the cover image, name and release year of the album. The layout 710 is generated with a set of properties. The properties comprise for example the fonts, font colors, font size, size of cover images, and the relative positions of the elements to display. In this example, the layout is organized by displaying the title under the cover, and the release year under the title of the album.

In this example, the layout 710 serves as a basis for the designer, who is able to modify the layout using the designer computing device 310. The designer may for example prefer a layout with the title of the album above the cover, and the release year above the name. The designer thus uses the designer computing device to generate a modified layout 800. The modification of the layout may be performed by any tool of edition of layout of applications.

In a number of embodiments of the invention, the modified layout 800 is provided as feedback to the server 340, and more particularly the machine learning engine. It can be included within the training set of the machine learning engine, in order to update the heuristics of the machine learning engine with the largest possible set of designer decisions. This architecture allows feeding the training set of the machine learning engine with layouts generated or modified by a large number of designers, and thus generate layout with designs as popular as possible.

In some embodiments of the invention, the same principle can be applied to the determination of properties of interest. In this example, the layout 710 generated by the server 340 implies that the properties of interest are the title of the album, the release year and the image cover. The designer may wish to display different properties. For example, he/she may wish to display the duration of the album, but not the release year. In a number of embodiments of the invention, the designer can use the designer computing device 310a to remove or add properties of interest to display. These choices may also be sent to the server 340 to be inserted of the training set of the machine learning engine to determine the properties of interest.

These examples demonstrate the ability of the invention to provide to application designers a simple and efficient solution to obtain, based on a class to display, a set of properties of interest to display, and even obtain a layout of the invention.

The examples described above are given as illustrations of embodiments of the invention. They do not in any way limit the scope of the invention which is defined by the following claims.

## Claims

1. A designer computing device (310a, 310b) configured to design an application to be executed on a end-user computing device (320), said designer computing device comprising:
- an interface (315) to let a designer select one or more sources (311 a, 311 b) from which to obtain on the end-user computing device, based on a definition for one or more end-users, one or more instances belonging to a class to display;
- an access to a processing logic (312b, 342) to perform an application, a generation, or a combination thereof of a set of decision rules to one or more of:
- determine types of properties of said class to display, or one or more classes of interest in relation to said class to display;
- determine properties of interest of said class to display, or one or more classes of interest in relation to said class to display and;
- select one or more properties of interest of said class to display, or of one or more said classes of interest in relation to said classes to display;
- a generator (314) of end-user computer instructions to be embedded within the application on the end-user computing device, said computer instructions to:
- procure an interface on the end-user computing device to define, for the one or more end-users, the one or more instances;
- activate a communication link from the application to the one or more sources to retrieve values of said one or more properties of interest for the one or more instances;
- update a display of the application based on a layout of the application and said values of said one or more properties of interest for said one or more instances.

2. The designer computing device of claim 1, wherein the processing logic is configured to determine properties of interest based at least on said types of properties of said class to display, or one or more classes of interest in relation to said class to display.

3. The designer computing device of one of claims 1 to 2, wherein the processing logic is configured to iteratively identify said one or more classes of interest in relation to said class to display.

4. The designer computing device of one of claims 1 to 2, wherein the processing logic is configured, to iteratively build a tree wherein each node represents said class to display, or a class of interest in relation to said class to display, by:
- Adding said class to display as the root node of the tree;
- Recursively adding, for each node of the tree, classes of object of interest in relation to said node of the tree as child nodes of said node.

5. The designer computing device of one of claims 1 to 4, wherein the processing logic is configured to execute a decision rule of selection of said one or more properties of interest of said class to display, or of said one or more classes of interest in relation to said classes to display.

6. The designer computing device of claim 5, wherein said decision rule of selection is generated by a heuristics defined using a selection machine learning engine fed with decisions previously performed by designers.

7. The designer computing device of one of claims 1 to 6, wherein the interface is configured to display and highlight said properties of interest.

8. The designer computing device of claims 6 and 7, wherein:
- The interface is configured to let the designer remove properties from or add properties to said one or more properties to display;
- Said one or more properties are used to enrich a training set of the selection machine learning engine.

9. The designer computing device of one of claims 1 to 8, wherein the processing logic is further configured to generate the layout of the application.

10. The designer computing device of claim 9, wherein:
- The processing logic is configured to execute a layout machine learning engine to generate the layout of the application;
- The interface is configured to let the designer modify said layout of the application;
- The layout as modified is used to enrich a training set of the layout machine learning engine.

11. The designer computing device of one of claims 1 to 10, wherein classes are defined in a Web API, and said processing logic is configured to select said one or more properties of interest of said one or more classes to display by parsing queries of said Web API.

12. A developer computing device configured to create a design tool for a designer computing device, said developer computing device comprising:
- a machine learning engine to determine one or more properties of interest of a class to display in an application to be executed on a end-user computing device, or of one or more classes of interest in relation to said class to display in the application to be executed on a end-user computing device;
- a generator of designer computer instructions to be embedded on the designer computing device, said designer computer instructions to cause the designer computing device to generate:
- an interface to let a designer select one or more sources from which to obtain on the end-user computing device, based on a definition for one or more end-users, one or more instances objects belonging to one or more classes to display;
- an access to a processing logic to perform an application, a generation, or a combination thereof of a set of decision rules to one or more of:
- determine types of properties of said class to display, or one or more classes of interest in relation to said class to display;
- determine properties of interest of said one or more classes to display, or classes of interest in relation to said classes to display and;
- select one or more properties of interest of said one or more classes to display, or of said classes of interest in relation to said classes to display;
- a generator of end-user computer instructions to be embedded within the application on the end-user computing device, said computer instructions to:
- procure an interface on the end-user computing device to define, for the one or more end-users, the one or more instances;
- activate a communication link from the application to the one or more sources to retrieve values of said one or more properties of interest for the one or more instances;
- update a display of the application based on a layout of the application and said values of said one or more properties of interest for said one or more instances.

13. A machine learning server (340), said server comprising:
- An input port to receive, from a designer computing device configured to design an application to be executed on a end-user computing device, a class to display;
- A machine learning engine to perform an application, a generation, or a combination thereof of a set of decision rules to one or more of:
∘ determine types of properties of said class to display, or one or more classes of interest in relation to said class to display
∘ determine properties of interest of said class to display, and/or one or more classes of interest in relation to said classes to display; and
∘ select one or more properties of interest of said class to display or of said one or more classes of interest in relation to said classes to display;
- An output port to send to said designer computing device said one or more properties of interest, to be used to define a layout of said application to be executed on a end-user computing device.

14. A end-user computing device (400a, 400b) configured to execute an application to retrieve from one or more external sources (440a, 440b) and display one or more properties of interest of one or more instances belonging to a class to display or one or more classes of interest in relation to said class to display, said end-user computing device comprising:
- an interface to define (410), for one or more end-users, the one or more instances;
- a communication link (420a, 420b) from the application to the one or more sources to retrieve values of said one or more properties of interest for the one or more instances;
- a processing logic (430a, 430b) to update a display of the application based on a layout of the application and said values of said one or more properties of interest for said one or more instances.
